(19) Europäisches Patentamt
European Patent Office
Office européen des brevets

(11) **EP 2 285 022 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
*H04B 17/00* (2015.01)    *H04W 72/08* (2009.01)
*H04W 72/04* (2009.01)

(21) Anmeldenummer: **10007732.0**

(22) Anmeldetag: **26.07.2010**

(54) **Verfahren zur automatischen Kanalauswahl für Mehrpunktverbindungen**

Method for automatic channel selection for multi-point connections

Procédé de sélection de canal automatique pour plusieurs liaisons multipoint

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **13.08.2009 DE 102009037488**
**11.09.2009 DE 102009041203**

(43) Veröffentlichungstag der Anmeldung:
**16.02.2011 Patentblatt 2011/07**

(73) Patentinhaber: **Rohde & Schwarz GmbH & Co. KG**
**81671 München (DE)**

(72) Erfinder: **Kerger, Stefan**
**85445 Oberding (DE)**

(74) Vertreter: **Beder, Jens et al**
**Mitscherlich PartmbB**
**Patent- und Rechtsanwälte**
**Sonnenstraße 33**
**80331 München (DE)**

(56) Entgegenhaltungen:
WO-A1-01/26403      US-A1- 2003 152 046
US-A1- 2005 228 662      US-A1- 2007 115 877

- GALLAGHER M ET AL: "Advanced radio system architectures to integrate network and frequency management", HF RADIO SYSTEMS AND TECHNIQUES, 1994., SIXTH INTERNATIONAL CONFERENCE ON YORK, UK, LONDON, UK,IEE, UK, 1. Januar 1994 (1994-01-01), Seiten 310-314, XP006512860, DOI: DOI:10.1049/CP:19940513 ISBN: 978-0-85296-616-7
- HUIYAN ZHANG ET AL: "A Third-Generation Multicast Protocol for HF Wireless Networks", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17. Oktober 2005 (2005-10-17), Seiten 1-7, XP010901494, DOI: DOI:10.1109/MILCOM.2005.1605996 ISBN: 978-0-7803-9393-6
- JOHNSON E E: "IP multicasting in HF radio networks", MILITARY COMMUNICATIONS CONFERENCE, 2008. MILCOM 2008. IEEE, IEEE, PISCATAWAY, NJ, USA, 16. November 2008 (2008-11-16), Seiten 1-7, XP031408215, ISBN: 978-1-4244-2676-8

EP 2 285 022 B1

**Beschreibung**

Gegenstand der Erfindung ist ein Verfahren zur automatischen Kanalauswahl für Mehrpunktverbindungen, insbesondere Funkverbindungen im Kurzwellenbereich, sowie eine Vorrichtung, die eine automatische Kanalauswahl für Mehrpunktverbindungen durchführt und ein Programm zur Ausführung eines Verfahrens zur automatischen Kanalwahl für Mehrpunktverbindungen.

Funkverbindungen und hier besonders Kurzwellenfunkverbindungen stellen eine kostengünstige und erprobte Methode zur Kommunikation über kurze und lange Reichweiten dar. Nichtsdestoweniger ist die Nachrichtenübertragung über Kurzwellenverbindungen in hohen Maß abhängig von den Ausbreitungseigenschaften des Funkkanals in diesem Frequenzbereich. Die Ausbreitung elektromagnetischer Wellen im genannten Frequenzbereich ist durch große Schwankungen bei der Übertragungsqualität, beispielhaft beschrieben durch den Signal-Rauschabstand SNR, gekennzeichnet. Dabei lassen sich die Schwankungen in Gruppen einteilen. Zum einen handelt es sich um Effekte, die einem Tag-Nacht-Rhythmus folgen und über den Verlauf von mehreren Stunden den Mittelwert des SNR beeinflussen. Diese Schwankungen führen zu einer wesentlich besseren Übertragungsverhalten am Tag im Vergleich zur Nacht. Zum Anderen erfolgen aber auch Änderungen in der Übertragungsqualität aufgrund kurzfristiger Änderungen in der Ionosphäre. Diese kurzfristigen Änderungen treten in Zeiträumen weniger Sekunden auf und rufen Streuungen im Bereich von 20 bis 30dB hervor. Eine Übertragung von Informationen im genannten Frequenzbereich muss bei der Auswahl der Sendefrequenz diesen geschilderten Eigenschaften des Funkkanals Rechnung tragen. Ein Funkkommunikationsnetz hat üblicherweise eine Anzahl Funkkanäle zugewiesen, die sich durch eine vorgegebene Sendefrequenz, eine Frequenzbandbreite und eine Übertragungsart charakterisieren lassen, und durch eine Bezeichnung, beispielsweise eine Kanalnummer benannt werden. Für die Auswahl eines für die Übermittlung von Signalen geeigneten Übertragungskanals wird ein automatisiertes Verfahren, das sogenannte "Automatic Link Establishment, abgekürzt ALE, durchgeführt. Grundlage dieses Prozesses ist die Auswertung der Übertragungsqualität der zu Verfügung stehenden Kanäle (Link Quality Analysis, abgekürzt LQA) und Auswahl eines geeigneten Übertragungskanals nach vorab festgelegten Kriterien.

Für Punkt-zu-Punktverbindungen beschreibt die STANAG 4538 ein Verfahren zur Auswahl des optimalen Übertragungskanals aus einer vorgegebenen Anzahl von Übertragungskanälen unter der Vorgabe, dass die Datenrate der Übertragung maximiert wird. Voraussetzung für die Anwendung eines derartigen Optimierungsverfahrens ist, dass ein Qualitätskriterium für die Beurteilung der Qualität der Funkverbindung vorliegt. Ein derartiges Kriterium stellt beispielsweise der Signal-zu-Rauschabstand, dar.

In der US 4,328,581 wird ein Kurzwellenkommunikationssystem vorgeschlagen, dass den Signal-Rauschabstand SNR und die Bitfehlerrate BER für einen Funkkanal zwischen zwei Stationen ermittelt und beide Faktoren in einem Qualitätswert kombiniert und speichert. Der Übertragungskanal mit der besten Verbindungsqualität zwischen zwei Stationen erhält dabei die höchste Priorität zugewiesen. Wird eine Kommunikation zwischen zwei Stationen angefordert, so wird automatisch der Übertragungskanal mit der höchsten Priorität und damit mit der besten Verbindungsqualität ausgewählt.

Die internationale Offenlegungsschrift WO 01/26403 A1 zeigt ein Verfahren zur Zuweisung eines Übertragungskanals in einer Zelle eines zellularen Kommunikationsnetzes. Das zellulare Kommunikationsnetz weist eine Vielzahl weiterer Zellen auf. Das Verfahren umfasst Schritte des Empfangens einer Mehrzahl von Signalen zumindest einer weiteren Zelle, des Bestimmens einer durchschnittlichen Signalstärke und einer Standardabweichung für die Mehrzahl von Signalen, sowie Bestimmen eines oder mehrerer Übertragungskanäle auf Basis der durchschnittlichen Signalstärke und der Standardabweichung für die Mehrzahl von Signalen.

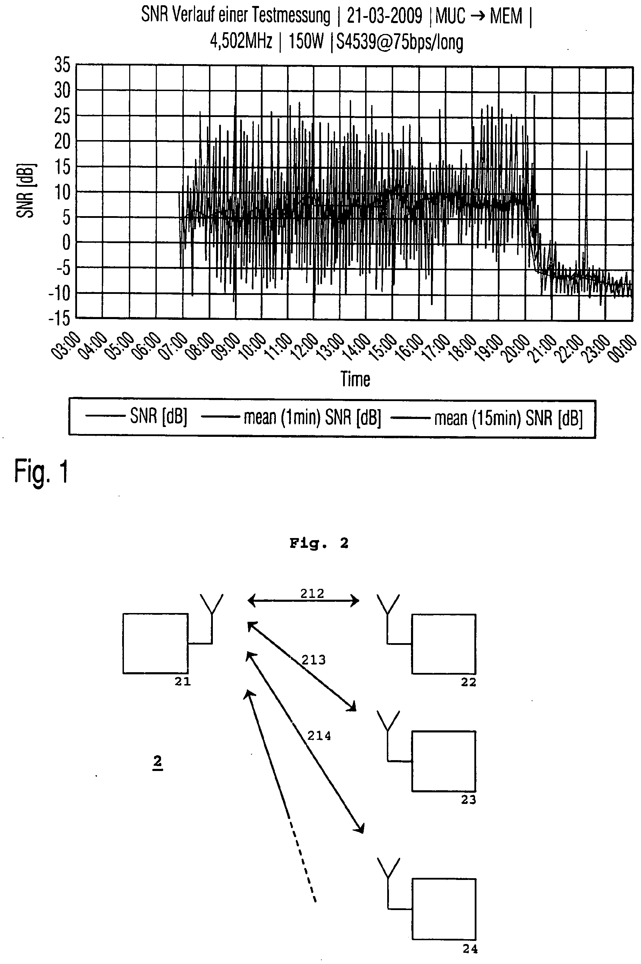

Neben herkömmlichen Punkt-zu-Punktverbindungen besteht in Kommunikationsnetzen auch eine Forderung nach Verbindungen von einer Station zu allen Teilnehmern des entsprechenden Netzes ("broadcast") und nach Verbindung zu einer Gruppe von Teilnehmern innerhalb des Netzes ("net call" oder "group call"). In einem Mehrpunktszenario tritt die Bedeutung der Datenrate bei der Übermittlung von Signalen zurück hinter das Kriterium der Erreichbarkeit aller gerufenen Stationen. Eine Auswahl des geeigneten Übertragungskanals unter der Voraussetzung, dass die höchste durchschnittliche Datenrate von der die Verbindung zu einer Mehrzahl von Stationen aufbauenden Station gewährleistet ist, bedeutet nicht notwendigerweise, dass ein Übertragungskanal ausgewählt würde, der die Erreichbarkeit aller gerufenen Stationen sicherstellt. Die starke Streuung der Qualitätseigenschaften von Kurzwellenkanälen, insbesondere, wie sie Figur 1 zu entnehmen ist und die durchaus im Bereich von 20 dB innerhalb weniger Sekunden betragen kann, erfordert ein neues Verfahren zur Auswahl eines geeigneten Übertragungskanals bei Mehrpunktverbindungen.

Es ist daher Ziel der vorliegenden Erfindung, ein Verfahren bereitzustellen, das den am besten geeigneten Übertragungskanal aus einer vorgegebenen Anzahl möglicher Übertragungskanäle auswählt, um Informationen von einer Station zu einer Mehrzahl von Stationen zu übertragen, wobei die Erreichbarkeit für alle zu erreichenden Empfangsstationen maximal ist.

Die dargelegte Aufgabe wird durch das erfindungsgemäße Verfahren zur automatischen Kanalwahl für Mehrpunktverbindungen mit den Merkmalen nach Anspruch 1 und das Programm zur Ausführung eines derartigen Verfahrens nach Anspruch 15 sowie die Vorrichtung zur automatischen Kanalwahl für Mehrpunktverbindungen nach Anspruch 8 gelöst.

Das Verfahren zur automatischen Auswahl eines Übertragungskanals aus einer Mehrzahl von Übertragungskanälen zum Senden eines Signals von einem Sender zu einem ersten Empfänger und mindestens einem zweiten Empfänger in einem Funksystem umfasst Schritte, in denen

zunächst für jeden Empfänger Qualitätswerte für die Qualität einer Verbindung von dem Sender zu dem ersten und mindestens einem zweiten Empfänger abhängig von Übertragungskanal und Zeit ermittelt und gespeichert werden, wobei für jeden Übertragungskanal, der zur Übertragung des Signals geeignet ist, Qualitätswerte ermittelt werden; und

eine erste Kenngröße für jeden Übertragungskanal aus den Qualitätswerten berechnet wird, wobei die erste Kenngröße einen Mittelwert der Qualitätswerte der Verbindungen von dem Sender zu dem ersten Empfänger und mindestens einem zweiten Empfänger beschreibt. Das Verfahren zur automatischen Auswahl eines Übertragungskanals ist dadurch gekennzeichnet, dass das Verfahren zusätzlich Schritte

des Berechnens einer zweiten Kenngröße für jeden Übertragungskanal aus den gespeicherten Qualitätswerten, wobei die zweite Kenngröße die Streuung der Qualitätswerte der Verbindungen von dem Sender zu einem ersten Empfänger und mindestens einem zweiten Empfänger darstellt,

des Korrigierens jeweils der ersten Kenngröße mit der zweiten Kenngröße für alle Übertragungskanäle, und

der Auswahl des Übertragungskanals zum Senden des Signals, der den größten Wert der mittels der zweiten Kenngröße korrigierten ersten Kenngröße umfasst. Dabei werden für die Lösung der Aufgabe statistische Kriterien berechnet und für die Auswahl eines geeigneten Übertragungskanals kombiniert. Der ausgewählte Übertragungskanal maximiert die Erreichbarkeit für alle empfangenden Stationen in einem Mehrpunktszenario durch die Auswahl und Verknüpfung der verwendeten statistischen Funktionen. Das erfindungsgemäße Verfahren ermöglicht die automatische Kanalauswahl eines Übertragungskanals für eine Mehrpunktverbindung. Für die Übermittlung von Signalen von einer ersten Station zu einer zweiten Station und mindestens einer weiteren Station steht eine Mehrzahl von Übertragungskanälen zu Verfügung. Die erste Station als die rufende Station wird im Folgenden kurz als Sender bezeichnet, die gerufenen Stationen als erster Empfänger und mindestens ein weiterer Empfänger. Grundsätzlich verfügt jede teilnehmende Station im Netz über die Möglichkeit Signale zu senden und Signale zu empfangen, also Sender oder Empfänger zu sein. Die Zuordnung kann also zeitlich wechseln. Jedem Übertragungskanal zwischen Sender und einem Empfänger kann ein Qualitätswert zugeordnet werden. Jeder Qualitätswert wird in Abhängigkeit von dem entsprechenden Übertragungskanal und der Zeit, für die dieser Qualitätswert ermittelt wurde, in der rufenden Station gespeichert. Aus den gespeicherten Qualitätswerten wird für jeden verfügbaren Übertragungskanal als erste Kenngröße ein Mittelwert der Qualität der Verbindungen von dem rufenden Sender zu dem gerufenen erstem Empfänger und mindestens einem gerufenen zweiten Empfänger ermittelt. In einem weiteren Schritt wird als zweite Kenngröße aus den gespeicherten Qualitätswerten ein Maß für die Streuung der Qualitätswerte für die Verbindung von rufendem Sender zu den gerufenen ersten und mindestens einem zweiten Empfänger berechnet. Anschließend wird die erste Kenngröße mittels der zweiten Kenngrößen korrigiert und derjenige Kanal für die Übertragung des Signals von dem Sender zu den empfangenden Stationen ausgewählt, der den maximalen Wert für die mit der zweiten Kenngröße korrigierte erste Kenngröße aufweist.

Da die erste Kenngröße auf dem Mittelwert der Übertragungskanalqualität zu den gerufenen Stationen beruht, die zweite Kenngröße ein Maß für die Streuung der Übertragungskanalqualität zu den gerufenen Stationen darstellt, wird der Übertragungskanal ausgewählt, der die homogensten Übertragungseigenschaften von rufenden Sender zu gerufenen Empfängern aufweist. Durch diese Wahl der Kenngrößen und die entsprechende Verknüpfung wird gewährleistet, dass die Erreichbarkeit der Stationen gegenüber einer reinen Maximierung der Datenübertragungsrate höher bewertet wird. Ein weiterer Vorteil des Verfahrens ist, dass aufgrund der genannten Änderungen im Verfahren der automatischen Kanalwahl keinerlei Einschränkungen gegenüber den gültigen Standard STANAG 4538 erfolgen und damit vollständige Interoperabilität mit den für das erfindungsgemäße Verfahren mit den gegenwärtig implementierten Verfahren besteht.

Die erfindungsgemäße Vorrichtung zur automatischen Kanalwahl verfügt über die entsprechenden Mittel zur Durchführung der einzelnen Schritte.

In den Unteransprüchen sind vorteilhafte Weiterbildungen des erfindungsgemäßen Verfahrens sowie der Vorrichtung und des Programms ausgeführt.

Insbesondere ist es vorteilhaft, wenn als erste Kenngröße der arithmetische Mittelwert und als zweite Kenngröße die Standardabweichung verwendet wird.

Weiterhin ist es vorteilhaft, wenn für das Verfahren als eine drittes Kenngröße aus den Qualitätswerten der Median für jeden Übertragungskanal ermittelt wird und anschließend derjenige Übertragungskanal für die Verbindung von Sender zu erstem Empfänger und jedem weiteren Empfänger ausgewählt wird, für die Summe aus der evtl. gewichteten dritten Kenngröße und die mit der evtl. gewichteten zweiten Kenngröße korrigierte erste Kenngröße maximal wird. Mit der Bildung dieses Terms wird erreicht, dass einerseits der homogenste Übertragungskanal ausgewählt wird und andererseits durch zusätzliche Berücksichtigung des Median einzelne, weit vom Mittelwert entfernt liegende Qualitätswerte geringeren Einfluss ausüben.

Dabei ist es besonders bevorzugt, wenn ein erster Faktor zur Skalierung der zweiten Kenngröße als Maß für die Streuung der Kanalqualitätswerte und ein zweiter Faktor zur Skalierung des Median als dritter Kenngröße eingeführt werden. Über die Wahl des ersten Faktors und des zweiten Faktors und das Verhältnis der beiden Faktoren zueinander lassen sich die Gewichtung der Kenngrößen Median und Streuung in dem für die Auswahl des Übertragungskanals entscheidenden erfindungsgemäßen Term einstellen. Damit verfügt der Nutzer des Verfahrens über die Möglichkeit, das Gewicht stärker auf optimierte Datenrate oder stärker auf Erreichbarkeit zu legen.

Gemäß einer weiteren bevorzugten Ausführungsform werden alle gespeicherten Qualitätswerte eines Übertragungskanals und für die Verbindung zu einer Station über die Zeit mit einer Gewichtungsfunktion multipliziert. Dabei berücksichtigt die Gewichtungsfunktion den zeitlichen Abstand des jeweils zu gewichtenden Qualitätswertes von dem Zeitpunkt der Verbindung. Auf diese Weise kann erreicht werden, dass zeitlich benachbarte Qualitätswerte einen größeren Einfluss auf die Auswahl des Übertragungskanals erhalten, als zeitlich weiter entfernte Qualitätswerte. Das Maß des Einflusses benachbarter Qualitätswerte auf die Übertragungsqualität des Kanals zum betrachteten Zeitpunkt ist durch die Wahl von Parametern der Gewichtungsfunktion einstellbar.

Dabei ist es besonders bevorzugt, wenn die Qualitätswerte für die Qualität eines Übertragungskanals von einem ersten Sender zu einem Empfänger aus einer Mehrzahl von Empfängern auf einer der Größen Bitfehlerrate BER, Dopplerverschiebung, Anzahl der Signalausbreitungswege, Signal-Rauschabstand SNR oder SINAD beruhen. Auch eine Kombination zweier oder mehrerer der genannten Merkmale zu einem Qualitätswert ist möglich.

Weitere Ansprüche richten sich auf eine Vorrichtung geeignet zur Durchführung des erfindungsgemäßen Verfahrens nach Anspruch 1.

Dabei weist die erfinderische Vorrichtung zur automatischen Kanalwahl für Mehrpunktverbindungen Mittel geeignet zur Speicherung von Qualitätswerten auf. Die Qualitätswerte beschreiben jeweils die Übertragungsqualität eines Übertragungskanals von einer sendenden Station zu einer empfangenden Station zu einem Zeitpunkt. Darüber hinaus verfügt die Vorrichtung über Mittel, die zur Berechnung mehrerer statistischer Größen geeignet sind. Diese statistischen Größen sind zum Einen eine erste Kenngröße als Maß für den Mittelwert der Qualitätswerte für einen Übertragungskanal von dem Sender zu einem ersten Empfänger und mindestens einem zweiten Empfänger und zum Anderen eine zweite Kenngröße, das die Streuung der Qualitätswerte für eine Verbindung vom Sender zu einem ersten Empfänger und mindestens einem zweiten Empfänger beschreibt. In einer Auswahleinrichtung wird anschließend der Kanal für die Übertragung der Signale ausgewählt, der den maximalen Wert des Terms aus der mittels der zweiten Kenngröße korrigierten ersten Kenngröße aufweist. Dieser in dem Mittel zur Auswahl des Übertragungskanals bestimmte Kanal wird anschließend einer Sendeeinrichtung zur Übertragung der Signale über diesen gewählten Kanal übermittelt.

Weitere Unteransprüche enthalten vorteilhafte Weiterbildungen der erfinderischen Vorrichtung zur automatischen Kanalwahl bei Mehrpunktverbindungen.

Die Vorrichtung verwendet in einer besonderen Ausführungsform als erste Kenngröße den arithmetischen Mittelwert und als zweite Kenngröße die Standardabweichung. Besonders bevorzugt weist die erfindungsgemäße Vorrichtung zur automatischen Kanalwahl bei Mehrpunktverbindungen Mittel zur Berechnung des Median als dritter Kenngröße aus den Qualitätswerten auf, die die Verbindungen von einem Sender zu jeweils einem Empfänger beschreiben und ermittelt anschließend in einer Einheit zur Auswahl des Übertragungskanals aus einer Mehrzahl von Übertragungskanälen den geeigneten Kanal danach, dass für diesen Übertragungskanal der Term aus Summe von dritter Kenngröße und der mit der zweiten Kenngröße korrigierten ersten Kenngröße maximal ist.

In einer vorteilhaften Ausführungsform wird bei Ermittlung des zu maximierenden Terms eine Skalierung der zweiten Kenngröße mit einem ersten Faktor und der dritten Kenngröße mit einem zweiten Faktor in entsprechenden Gewichtungseinrichtungen der erfinderischen Vorrichtung vorgenommen. Damit ist gemäß Vorgaben des Nutzers der Schwerpunkt der Kenngrößen für die Kanalauswahl entweder stärker auf den Median und damit auf die Maximierung der Übertragungsrate oder aber auf die Standardabweichung und damit auf die Erreichbarkeit aller gerufenen Stationen zu legen. Ebenso entsprechend einer vorteilhaften Weiterbildung der Vorrichtung kann in einer besonderen Gewichtungseinrichtung eine Gewichtung der Qualitätswerte eines Übertragungskanals und zu einer empfangenden Station über die Zeit mit einer Gewichtungsfunktion vorgenommen werden. Diese Gewichtungseinrichtung berücksichtigt dabei den zeitlichen Abstand eines zu gewichtenden Qualitätswertes von dem Zeitpunkt der aufzubauenden Verbindung über Wahl eines Parameters. Über diese Gewichtungseinrichtung können längerfristige Schwankungen und bekannte Zeitabhängigkeiten der Schwankungen der Qualitätswerte in geeigneter Form zur Ermittlung des Übertragungskanals herangezogen werden. Die zur Bestimmung des geeigneten Übertragungskanals genutzten Qualitätswerte können in besonderen Ausführungsformen der erfindungsgemäßen Vorrichtung zum Einen allgemeine Größen zur Beschreibung der Signalübertragung wie Bitfehlerrate BER, Dopplerverschiebung, Dopplerspread, Anzahl der Ausbreitungswege, Signal-Rauschabstand SNR oder SINAD sein, zum Anderen jedoch auch davon abgeleitete Qualitätswerte oder Kombinationen der genannten Größen.

Eine bevorzugte Ausführungsform des erfindungsgemäßen Verfahrens und der Vorrichtung ist in der Zeichnung dargestellt und wird in der nachfolgenden Beschreibung näher erläutert. Es zeigen:

Fig. 1 Darstellung der Aufzeichnung über einen Tag eines gemessenen Verlaufs des Signal-Rausch-Abstands einer Modemverbindung,

Fig. 2 Beispiel für ein Szenario einer Mehrpunktverbindung,

Fig. 3 Grundsätzlicher Aufbau einer Link-Quality-Analysis-Tabelle (LQA-Tabelle) für Verfahren zur automatischen Kanalwahl,

Fig. 4 Flussdiagramm des erfindungsgemäßen Verfahrens zur automatischen Kanalwahl für Mehrpunktverbindungen,

Fig. 5 Darstellung der Funktion $\beta_t$ zur Gewichtung benachbarter Qualitätsinformationen in einem Zeitschlitz,

Fig. 6 Darstellung des Verfahrens zur Berechnung des Kanals mit der höchsten Erreichbarkeitswahrscheinlichkeit für ein Mehrpunktszenario,

Fig. 7 Tabelle mit einem Berechnungsbeispiel für das erfindungsgemäße Verfahren für einen Parameter $\alpha = 0.7$,

Fig. 8 Tabelle mit einem Berechnungsbeispiel für das erfindungsgemäße Verfahren für einen Parameter $\alpha = 0.5$,

Fig. 9 Blockschaltbild einer Ausführung einer Vorrichtung zur automatischen Kanalwahl für Mehrpunktverbindungen.

Zunächst sollen anhand von Fig. 1 grundlegende Eigenschaften der Signalübertragung im Kurzwellenbereich vorgestellt werden, soweit sie zum Verständnis des nachfolgend geschilderten Ausführungsbeispiels hilfreich sind. In Figur 1 ist ein gemessener Verlauf des Signal-Rauschabstands SNR einer Modemübertragung über eine Funkstrecke bei einer Sendefrequenz 4,502 MHz über einen Zeitraum von 21 Stunden aufgezeichnet. Aus der Messung lassen sich charakteristische Eigenschaften des Kurzwellenfunks ablesen. Die Wellenausbreitung im Kurzwellenbereich wird über die Reflexion der Raumwelle stark von den Eigenschaften der Schichten der Ionosphäre beeinflusst. Diese Eigenschaften unterliegen starken kurz- und langfristigen Schwankungen, beispielsweise über Sonneneinstrahlung, Gewitter, Sonnenfleckenaktivität. Zum Einen handelt es sich um Effekte, die sich in einem Tag-Nacht-Rhythmus ändern und über den Verlauf von mehreren Stunden den Mittelwert des SNR beeinflussen. Dabei schwankt ein über 15 Minuten berechneter Mittelwert um rund 8 dB zwischen Tag und Nacht. Zum Anderen weist der reale Funkkanal starke kurzfristige Schwankungen in einer Größenordnung von 20 bis 30 dB auf. Da die Ausbreitungseigenschaften zusätzlich frequenzabhängig sind, kommt der Berücksichtigung der Auswahl der Sendefrequenz im Rahmen einer automatischen Kanalwahl für die Übertragungsqualität bis hin zur grundsätzlichen Möglichkeit eines Verbindungsaufbaus große Bedeutung zu.

Fig. 2 zeigt einen prinzipiellen Aufbau eines Kommunikationsnetzes am Beispiel eines Funkkommunikationsnetzes 2 mit den Funkstationen 21, 22, 23 und 24. Jede Station verfügt über eine eindeutig zugeordneten Bezeichnung, beispielsweise eine Nummer oder Adresse. Die Anzahl der Stationen ist dabei nicht auf die in der Figur 2 gezeigte Anzahl Stationen begrenzt. Jede Funkstation 21, 22, 23, 24 hat die Fähigkeit, Signale zu senden und Signale zu empfangen. Damit kann jede Station Punkt-zu-Punkt-Verbindungen zu allen anderen Stationen im Funknetz aufbauen. Mögliche Verbindungen 212, 213, 214 mit den Stationen 22, 23 und 24 sind für das Beispiel der Station 21 mit den Stationen 22, 23 und 24 sind in Figur 2 dargestellt. Dabei bezeichnet beispielsweise die Verbindung 212 die Verbindung von Station 21 mit Station 22. Dem Funknetzwerk 2 aus den Stationen 21, 22, 23, 24 steht eine Anzahl von k Funkkanälen zum Aufbau von Funkverbindungen zur Übermittlung von Signalen zwischen den Stationen zu Verfügung. Jede Verbindung 212, 213, 214 findet auf einem Funkkanal statt. Aufgrund der oben genannten Eigenschaften der Ausbreitung elektromagnetischer Wellen muss es aber nicht für jeden Zeitpunkt und jeden Funkkanal möglich sein, eine Verbindung zwischen zwei Stationen aufzubauen. Jeder der gezeigten Verbindungen 212, 213, 214 kann ein Qualitätswert zugeordnet werden, der eine Qualität der Funkverbindung beschreibt. Jede Station 21, 22, 23, 24 verfügt über Mittel zum Speichern der Qualitätswerte, beispielsweise dem SNR, für die Verbindung zu anderen Stationen in Form einer Matrix oder Tabelle in einer Datenbank. Die Ermittlung der Qualitätswerte kann jede Station vornehmen, indem sie aus Sendesignalen anderer Stationen einen Qualitätswert ermittelt und unter Angabe der sendenden Station des Messsignals, des entsprechenden Funkkanals und des Zeitpunkts speichert. Z.B. sendet jede der Stationen 212, 213, 214 in einem vorgegebenen Zeitraster einbekanntes Signal aus, welches der Sender 22 empfängt. Aus dem bekannten, empfangenen Signal kann nun durch den Sender 22 der gesuchte Qualitätswert für den versendeten Kanal ermittelt werden. Es sind aber auch andere Formen der Ermittlung von Qualitätswerten für Punkt-zu-Punktverbindungen denkbar und möglich.

Im Funkkommunikationsnetz 2 sind neben Punkt-zu-Punkt-Verbindungen auch Punkt-zu-Mehrpunktverbindungen möglich. Für diesen Fall initiiert eine rufende Station 21 eine Verbindung zu mehreren gerufenen Stationen 22, 23, 24 in einem Funkkanal. Damit diese Punkt-zu-Mehrpunktverbindung zu allen gerufenen Teilnehmern zustande kommt, ist ein Funkkanal auszuwählen, der eine Verbindungen zu allen gerufenen Stationen ermöglicht. Das erfindungsgemäße Verfahren löst das Problem der Auswahl des Funkkanals aus der Mehrzahl von zu Verfügung stehenden Funkkanälen, der eine maximale Erreichbarkeit für eine Punkt-zu-Mehrpunktverbindung von Station 21 zu den Stationen 22, 23, 24 erzielt. Für die Darstellung des erfindungsgemäßen Verfahrens kann die rufende Station 21 als Sender und die gerufenen Stationen 22, 23, 24 als Empfänger betrachtet werden, ohne dass dies eine Einschränkung der Gültigkeit des Verfahrens bedeutet.

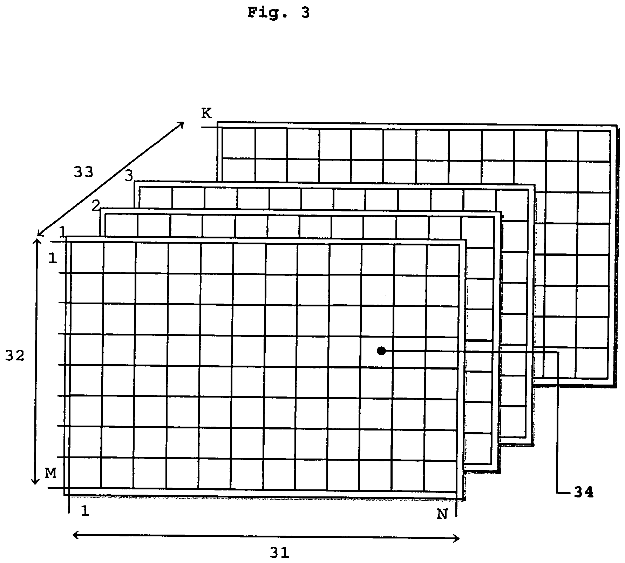

Zur automatischen Auswahl eines Kanals für Punkt-zu-Punktverbindungen und Punkt-zu-Mehrpunktverbindungen liegt in jeder Station eine Datenbasis vor, die Informationen über Qualitätswerte zu Funkverbindungen verknüpft mit den verfügbaren Funkkanälen, den Adressen von teilnehmenden Stationen im Funknetz, und zum Zeitpunkt, zu der der Qualitätswert einer Funkverbindung ermittelt wurde umfasst. Ein Beispiel für eine Link-Quality-Analysis-Tabelle, kurz LQA-Tabelle oder LQA-Matrix, als Beispiel für eine solche Datenbasis für die automatische Kanalauswahl von Kurzwellenverbindungen zeigt Fig. 3. In jeder teilnehmenden Station im Funkkommunikationsnetz 2 wird eine derartige Tabelle oder Matrix angelegt und laufend aktualisiert. Dabei ist eine Dimension der Tabelle die Zeit 31, eine Dimension die Nummer der anderen Station 32 zu der eine Verbindung gespeichert ist, und eine dritte Dimension die Kanalnummer 33. Jeder Eintrag in die Tabelle, der bei einer ersten Station 21 geführten und gespeicherten Tabelle stellt einen Qualitätswert 34 für eine Verbindung zu einer zweiten oder weiteren Station 22, 23, 24 in einem bestimmten Funkkanal k zu einer bestimmten Zeit dar. Dabei wird die Zeit, zu der eine Verbindung im Kanal k einen Qualitätswert 34 in der vorliegenden Tabelle durch einen Zeitschlitz t dargestellt. Die Zeitschlitze t reichen im vorliegenden Beispiel von t=0 bis t=N. Die verfügbaren Funkkanäle für eine Verbindung zwischen zwei Stationen tragen die Kanalnummern 1 bis K. Jeder Funkkanal k ist durch eine Sendefrequenz, eine Kanalbandbreite und weitere Signalparameter definiert. Die Stationen im Funknetzwerk 2 für die Qualitätswerte 34 in der Tabelle gespeichert werden können, tragen die Stationsnummern 1 bis M.

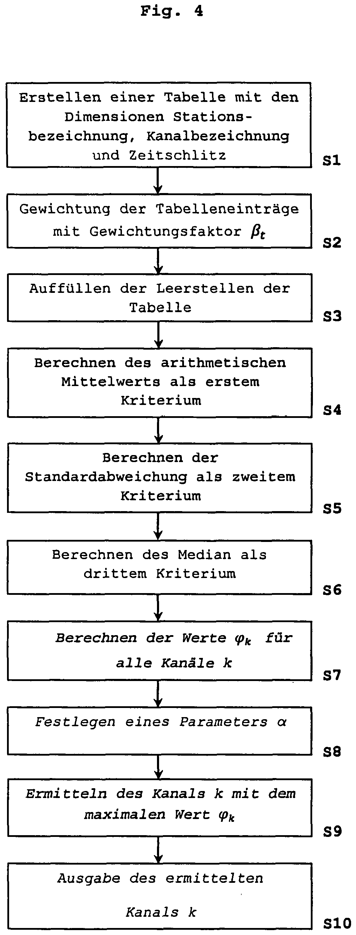

Fig. 4 zeigt in einem Flussdiagramm den Ablauf des erfindungsgemäßen Verfahrens in einer bevorzugten Ausführungsform. Im Folgenden wird das Verfahren am Beispiel eines Kurzwellenfunksystems erläutert. Eine Anwendung des Verfahrens für andere Kommunikationsnetze ist aber ebenso möglich.

Es werden in einem ersten Schritt S1 durch die erste Station 22 Qualitätswerte für die Qualität einer Verbindung zwischen der ersten Station 22 und anderen Stationen aus einer Vielzahl von Stationen in Abhängigkeit von Kanal und von der Zeit gespeichert. Die Qualitätswerte für jeden zugewiesenen Funkkanal werden beispielsweise durch Messung eines von anderen Stationen ausgesandten Sendesignals in regelmäßigem zeitlichem Abstand gewonnen. Die Qualitätswerte werden in einer Matrix mit einem Bezeichner für die das Sendesignal sendenden Station, dem Kanal k in dem das Sendesignal übertragen wird und der Zeit der Messung gespeichert. Dabei wird die Zeit der Messung einem Zeitschlitz t zugeordnet. Jede Station 21, 22, 23, 24 in dem betrachteten Kurzwellenfunknetz kann in dieser Weise eine Matrix für die Qualität der einzelnen möglichen Funkverbindungen erstellen. In einem zweiten Schritt S2 wird nun jeder Wert in der Matrix zeitlich mit einem Gewichtungsfaktor $\beta_t$ multipliziert. Im betrachteten Ausführungsbeispiel wird als Gewichtungsfaktor die Funktion

$$\beta_t = e^{-\lambda \Delta t} ; \qquad\qquad (1)$$

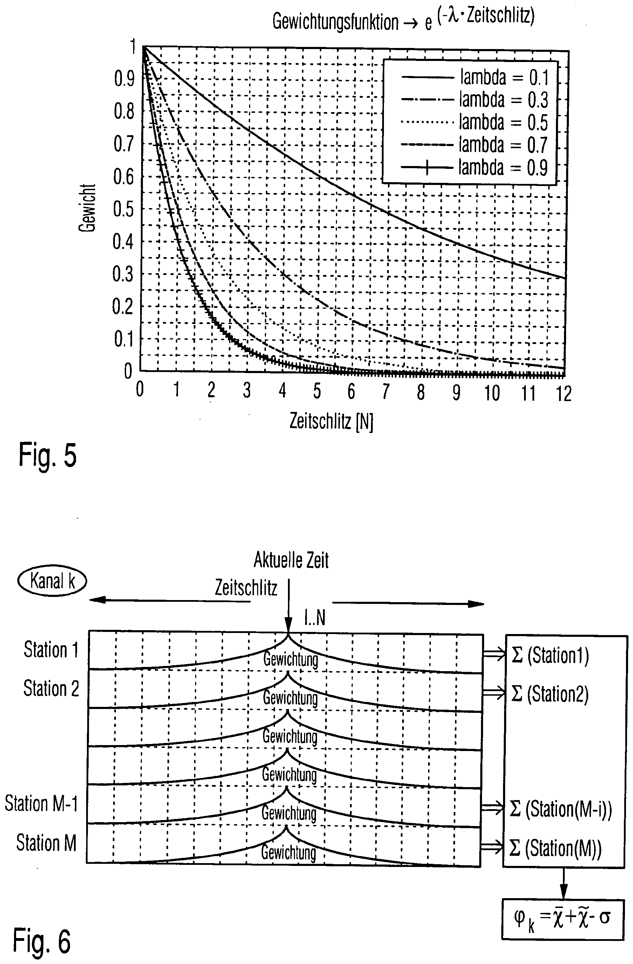

gewählt. Diese Gewichtung berücksichtigt den Einfluss der Qualitätswerte benachbarter Zeitschlitze auf den Qualitätswert des aktuellen Zeitschlitzes t. Dabei stellt $\Delta t$ den zeitlichen Abstand des zu gewichtenden Zeitschlitzes von dem aktuellen Zeitschlitz t, zu dem eine Verbindung hergestellt werden soll, dar. Der Parameter $\lambda$ bestimmt die Größe des Einflusses der benachbarten Zeitschlitze auf die gesamte Kanalqualität für die Verbindung zur betrachteten Station und es gilt $\lambda \in$ **[0..1]**. Es sind jedoch auch andere Gewichtungsfunktionen oder eine andere Wahl für den Parameter $\lambda$ möglich. In Figur 5 sind beispielhafte Verläufe die Funktion $\beta_t$ für unterschiedliche Parameter $\lambda$ mit $\lambda \in$ **{0.1, 0.3, 0.5, 0.7, 0,9}** gezeigt. Je geringer der Wert für $\lambda$ ist, desto stärker beeinflussen Werte benachbarter Zeitschlitze die Übertragungsqualität des aktuell betrachteten Kanals. Dabei kann $\lambda$ auf empirischer Erfahrung beruhen oder durch den Nutzer des Systems vorgegeben sein. In einem nächsten Schritt S3 wird für die Kombinationen von Kanal k und Station m, für die innerhalb der Matrix kein Qualitätswert existiert, die Matrix entsprechend dem folgenden Zusammenhang aufgefüllt:

$$SNR_{leer} = \min \left( SNR_{t;k;m} \right) - 1 ; \qquad\qquad (2)$$

Dabei wird in dieser Ausführungsform des erfindungsgemäßen Verfahrens davon ausgegangen, dass die Qualitätswerte in der Matrix auf dem Signal-Rauschabstand SNR beruhen. Es sind aber auch andere Qualitätsmerkmale denkbar. Die Vorschrift für das Auffüllen der Matrix ist dann dem verwendeten Merkmal entsprechend anzupassen. Das Element $SNR_{t;ch;m}$ stellt einen Signal-Rauschabstand im Zeitschlitz t für den Kanal k zur Station m dar. Bei Verwendung des SNR als Qualitätsmerkmal wird entsprechend der Vorschrift der minimale Wert aus der gesamten Matrix gesucht, dieser minimale Wert um Eins vermindert und anschließend an den entsprechenden Stellen der Matrix gespeichert. Nachdem nun jedes Feld einen zeitlich gewichteten Qualitätswert enthält, wird die Summe $\Phi_{ch}$ der gewichteten Qualitätswerte für jeden Kanal über alle Zeitschlitze t gebildet. In der betrachteten Ausführungsform des Verfahrens beträgt die Anzahl der Zeitschlitze 24, eine andere Einteilung der Zeit ist ebenso möglich.

$$\Phi_{ch} = \sum_{t=0}^{23} SNR_{t;ch;m} \cdot \beta_t ; \qquad (3)$$

Auf Basis der berechneten Einzelmerkmale für jede Station wird nun ein homogener Wert berechnet, der die maximale Erreichbarkeit jeder Station beinhaltet. Dazu wird in Schritt S4 als eine erste Kenngröße für jeden Kanal aus den gespeicherten Qualitätswerten ein Wert ermittelt, der einen Mittelwert der Qualität der Verbindungen von dem Sender zu einem ersten Empfänger und mindestens einem zweiten Empfänger darstellt. In der bevorzugten Ausführungsform wird als Mittelwert der arithmetische Mittelwert $\bar{x}$ verwendet, es ist aber die Verwendung anderer Mittelwerte ebenso denkbar. Für den arithmetischen Mittelwert lautet die Berechnungsvorschrift

$$\bar{x} = \frac{1}{N} \sum_{i=0}^{N-1} x_i ; \qquad (4)$$

Im darauffolgenden Schritt S5 wird als eine zweite Kenngröße ein Maß für die Streuung der Qualitätswerte für den betrachteten Kanal berechnet. Dies ist in der bevorzugten Ausführungsform die Standardabweichung, aber es sind auch andere Maße für die Streuung der Qualitätswerte möglich. Wird die Standardabweichung $\sigma$ als Maß für die Streuung verwendet, so lautet der zu berechnende Zusammenhang

$$\sigma = \sqrt{\frac{1}{N} \sum_{i=0}^{N-1} (x_i - \bar{x})^2} ; \qquad (5)$$

Anschließend wird in Schritt S6 in einer bevorzugten Ausführungsform des erfindungsgemäßen Verfahrens der Median als dritte Kenngröße zur Beurteilung der Übertragungsqualität aus den Werten für die Verbindungsqualität über alle Stationen N bestimmt:

$$\tilde{x} = \begin{cases} x_{\frac{N-1}{2}} & \text{für ungerade } N \\ \frac{1}{2}\left(x_{\frac{N}{2}} + x_{\frac{N+1}{2}}\right) & \text{für gerade } N \end{cases} \qquad (6)$$

In einem Schritt S7 wird nun der Wert des Parameters $\alpha$ bestimmt. Mit diesem Parameter $\alpha \in$ **[0..1]** kann der Einfluss von Median $\tilde{x}$ oder Standardabweichung $\sigma$ skaliert werden. Zweck dieser Skalierung ist es, den Algorithmus für die Auswahl des Übertragungskanals entsprechend Kundenforderungen anpassen zu können. In einer bevorzugten Ausführungsform des erfindungsgemäßen Verfahrens wird im Rahmen der Skalierung die zweite Kenngröße, hier die Standardabweichung, mit einem ersten Faktor $\alpha$ und die dritte Kenngröße, hier der arithmetische Mittelwert, mit dem Faktor $(1-\alpha)$ multipliziert. Es sind aber auch andere Verfahren der Skalierung und andere Zusammenhänge zwischen erstem Faktor und zweiten Faktor für die Skalierung möglich. Mit der so gewählten Skalierung wird der im Schritt S8 zu berechnende Zusammenhang für die Erreichbarkeit $\varphi_k$ der Stationen im Kanal k zu

$$\varphi_k = \bar{x}_k + (1 - \alpha)\,\tilde{x}_k - \alpha\,\sigma_k ; \qquad (7)$$

In dieser Rechenvorschrift der bevorzugten Ausführungsform des $\bar{x}_k$ erfindungsgemäßen Verfahrens wird der verwendete Mittelwert um die Standardabweichung $\sigma$ verringert. Dies führt dazu, dass stark schwankende Kanäle mit einer entsprechend großen Standardabweichung einen auf einen geringeren Wert korrigierten Mittelwert erhalten. Die zusätzliche Addition des Medians $\tilde{x}$ führt zu einer erhöhten Betonung des Mittelwerts $\overline{x}_k$. Dies erfolgt, um zu erreichen, dass bei einigen wenigen stark abweichenden Qualitätswerten, bei der dann vorliegenden vergleichsweise großen Standardabweichung $\sigma$ der Einfluss der Streuung der Qualitätswerte nicht zu hoch bewertet wird. Die Berechnungsvorschrift lautet unter Einsetzen der Zusammenhänge für Mittelwert $\overline{x}_k$, Standardabweichung $\sigma$ und Median $\tilde{x}$ eine ungerade Anzahl Stationen N schließlich

$$\varphi_k = \frac{1}{N} \sum_{i=0}^{N-1} x_{i,k} + (1-\alpha) \, x_{\frac{N-1}{2},k} - \alpha \sqrt{\frac{1}{N} \sum_{i=0}^{N-1} (x_{i,k} - \overline{x_k})^2}; \qquad (8)$$

und für eine gerade Anzahl Stationen N

$$\varphi_k = \frac{1}{N} \sum_{i=0}^{N-1} x_{i,k} + \frac{1}{2} (1-\alpha) \left( x_{\frac{N}{2},k} + x_{\frac{N+1}{2},k} \right) - \alpha \sqrt{\frac{1}{N} \sum_{i=0}^{N-1} (x_{i,k} - \overline{x_k})^2}; \qquad (9)$$

Wird der Parameter $\alpha$ zu Null gesetzt, so erhält man aus obiger Gleichung einen Zusammenhang, bei dessen Maximierung der Kanal mit dem größten mittleren Signal-Rauschabstand SNR für die Übertragung gewählt wird. Damit wird für diesen Kanal die Datenrate maximiert, wie es für Punkt-zu-Punktverbindungen sinnvoll ist, nicht aber wenn die Optimierung der Erreichbarkeit der Stationen das Ziel ist. Mit der Einführung des Parameters $\alpha$ wird der Nutzer somit in die Lage versetzt, den Schwerpunkt je nach Anwendung auf das Ziel "Maximieren der Datenübertragungsrate" oder auf das Ziel "Erreichbarkeit aller teilnehmenden Stationen einer Mehrpunktverbindung" zu legen.

In Schritt S9 wird nun der Kanal bestimmt, für den der Wert der Berechnungsvorschrift (8) bzw. (9) maximalen Wert annimmt.

$$k = \max \, (\varphi_k) \qquad (10)$$

Dieser Kanal liefert die höchste Erreichbarkeitswahrscheinlichkeit aller für den Aufbau einer Verbindung zu Verfügung stehender Kanäle k. In einem Schritt S10 wird der so ermittelte Kanal für die Kanaleinstellung der rufenden ersten Station bzw. des Senders ausgegeben.

In einer weiteren bevorzugten Ausführungsform des erfindungsgemäßen Verfahrens wird auf eine Berechnung der dritten Kenngröße Median verzichtet und lediglich der Mittelwert $\overline{x}$ als erste Kenngröße und ein Maß für die Streuung $\sigma$ als zweite Kenngröße berechnet. Ein Skalierungsfaktor $\alpha$ wird in diesem Fall nicht benötigt. Es kann aber auch eine Gewichtung der Streuung $\sigma$ in einer weiteren Ausführungsform des erfindungsgemäßen Verfahrens vorgenommen werden. Anschließend wird in einem weiteren Schritt das Maß für den Mittelwert als erster Kenngröße um das Maß für die Streuung als zweiter Kenngröße korrigiert:

$$\varphi_k = \overline{x}_k - \sigma_k; \qquad (11)$$

Auch in dieser bevorzugten Ausführungsform wird entsprechend dem Zusammenhang

$$k = \max \, (\varphi_k) \qquad (12)$$

ein Kanal k bestimmt, für den die Erreichbarkeit aller teilnehmenden Stationen für eine Mehrpunktverbindung gegenüber dem Fall einer reinen Maximierung des Mittelwerts verbessert wird.

Im Folgenden wird anhand zweier Beispiele der konkrete Vorteil des erfindungsgemäßen Verfahrens dargestellt.

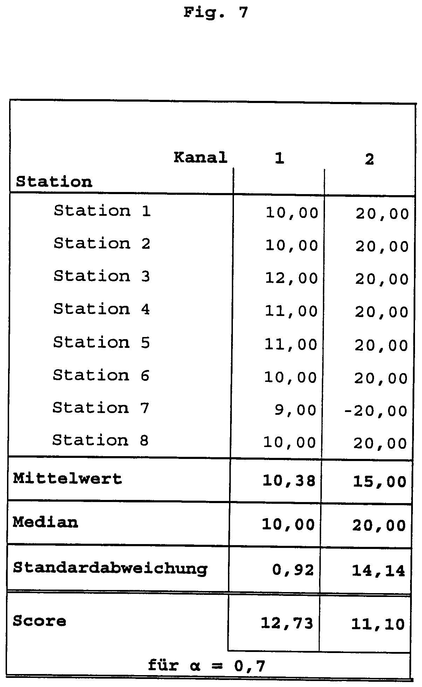

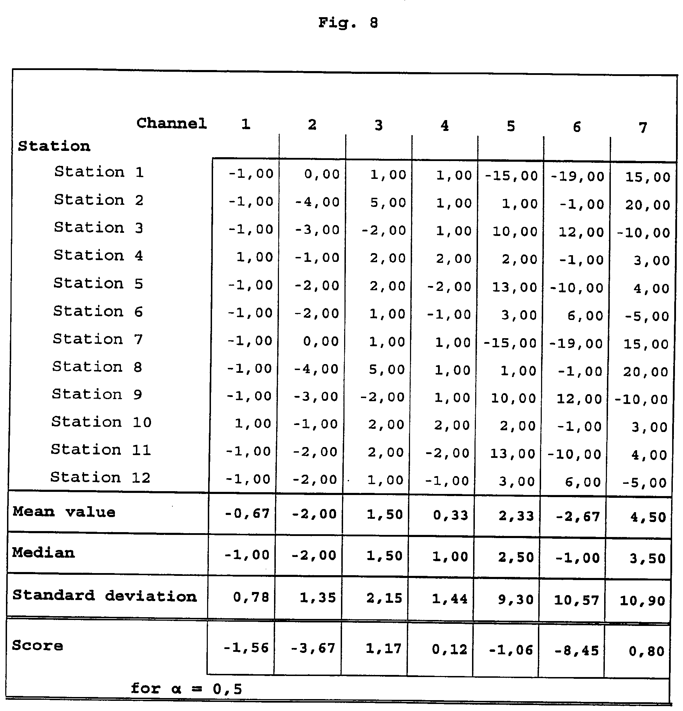

In Fig. 7 wird ein Szenario einer Punkt-zu-Mehrpunktverbindung von einer Station zu acht gerufenen Stationen (Station 1 bis Station 8) betrachtet. Für die Verbindung stehen zwei Kanäle 1 und 2 zu Verfügung. Die Einträge in die Tabelle nach Figur 8 stellen dabei Qualitätswerte für die Verbindung der sendenden Station zu einer empfangenden Station dar. In diesem Beispiel handelt es sich bei den Qualitätswerten um den Signal-Rauschabstand in dB. Dabei reichen die in der Tabelle gespeicherten Qualitätswerte von -20,00 dB bis +20,00 dB. Je größer der Qualitätswert ist, desto besser ist die Verbindung für diesen Kanal zwischen der sendenden Station und der jeweiligen empfangenden Station. Beispielsweise hat die Verbindung auf Kanal 2 zu Station 7 eine Qualität von -20,00 dB. Damit würde Station 7 auf Kanal 2 nicht mehr erreicht werden. Wird die Auswahl des Kanals für eine Mehrpunktverbindung zu den Stationen 1 bis 8 auf Basis der maximalen Datenrate getroffen, so würde Kanal 2 aufgrund des höheren Mittelwerts von +15,00 dB ausgewählt. Damit wäre Station 7 mit einem SNR von -20,00 dB jedoch nicht erreichbar. Wird hingegen erfindungsgemäß die Erreichbarkeit $\varphi$ mit einer Skalierung $\alpha = 0,7$ ausgewertet, so ergibt sich für Kanal 1 ein Wert von +12,73 dB gegenüber +11,10 dB für Kanal 2. Dementsprechend würde Kanal 1 für die Mehrpunktverbindung ausgewählt und die Erreichbarkeit aller Stationen einschließlich Station 7 wäre dementsprechend sichergestellt. Damit löst die Auswahl nach dem erfindungsgemäßen Verfahren die Aufgabenstellung der automatischen Auswahl des Übertragungskanals für Mehrpunktverbindungen unter der Randbedingung, dass die Erreichbarkeit aller Stationen sichergestellt wird.

In Fig. 8 wird das Szenario einer Punkt-zu-Mehrpunktverbindung für zwölf empfangende Stationen neben einer sendenden Station und bei sieben möglichen Kanälen zur Verbindung betrachtet. In der Tabelle für die Analyse der Verbindungsqualität der sendenden Station sind Qualitätswerte eingetragen, die von -19,00 dB für Station 7 auf Kanal 6 bis zu +20,00 dB für Station 2 und Station 8 auf Kanal 7 reichen. Bei Vergleich der berechneten Werte nach dem erfindungsgemäßen Verfahren für einen Skalierungsfaktor $\alpha = 0,5$ erhält man Mittelwerte für das SNR zwischen -2,00 dB für Kanal 2 bis +4, 50 dB für Kanal 7. Aufgrund des Mittelwertes würde in diesem Fall Kanal 7 für eine Verbindung ausgewählt, wenn allein die erste Kenngröße (Mittelwert) für die Beurteilung der Auswahl des Kanals herangezogen würde und damit die Maximierung der Datenrate im Vordergrund steht. Allerdings lassen die geringen SNR Werte für eine Verbindung zu Station 3 und Station 9 mit jeweils -10 dB eine Verbindung zu diesen Stationen auf Kanal 7 nicht zustande kommen. Bei Anwendung des erfindungsgemäßen Verfahrens ergibt sich ein Wert für die Erreichbarkeit $\varphi_k$ von +1,17 für den Kanal 3. Damit wird Kanal 3 für eine Verbindung zu allen zwölf Stationen ausgewählt, da er die homogensten Übertragungseigenschaften für zu allen Stationen aufweist. Damit ist Kanal 3, der für eine Mehrpunktverbindung die besten Eigenschaften aufweist.

Die vorliegende Erfindung hat ein effizientes und zuverlässiges Verfahren zur automatischen Kanalauswahl für Mehrpunktverbindungen und eine weitergebildete Vorrichtung zu automatischen Kanalauswahl zum Inhalt, die sich durch hohe Zuverlässigkeit unter dem Kriterium der Erreichbarkeit bei der Kanalauswahl auszeichnet.

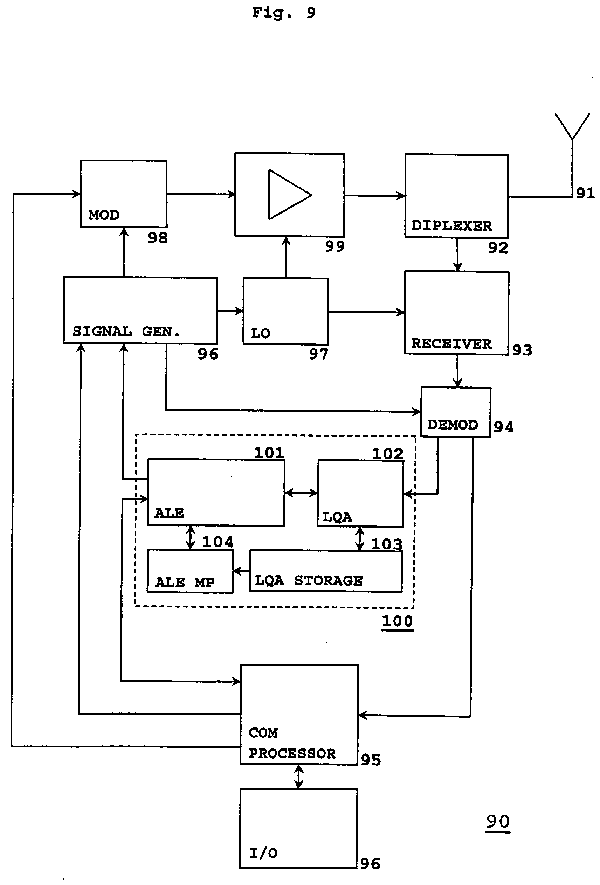

Fig. 9 zeigt eine Ausführungsform einer Vorrichtung zur automatischen Auswahl eines Übertragungskanals 100 einer Funkstation 90. Dabei ermittelt eine Einheit zur Ermittlung von Qualitätswerten 102 aus Signalen, die sie von einer Empfangseinrichtung 93 über einen Demodulator 94 erhält, Qualitätswerte 34. Diese Qualitätswerte 34 beschreiben die Qualität einer Verbindung über einen Übertragungskanal 33 in einem Zeitschlitz 31 zu einer Station mit einer Stationsnummer 32. Dieser Qualitätswert beruht in einem möglichen Ausführungsbeispiel der erfinderischen Vorrichtung auf der Messung eines Signal-Rauschabstand SNR für ein Sendesignal von einer Station 22 zu einer Station 21 für einen Übertragungskanal 33 und einen Zeitschlitz 31. Der ermittelte Qualitätswert wird in einem Speicher 103 gespeichert. Auf die in diesem Speicher 103 gespeicherten Qualitätswerte 34 wird für die Berechnung der einzelnen statistischen Kenngrößen entsprechend dem erfindungsgemäßen Verfahren in den Einheiten zur automatischen Kanalauswahl für Punkt-zu-Punktverbindungen 101 und in der Einheit zur automatischen Kanalwahl für Punkt-zu-Mehrpunktverbindungen 104 zugegriffen. Zur Auswahl eines geeigneten Übertragungskanals für eine Punkt-zu-Mehrpunktverbindung wird in dem Mittel zur automatischen Kanalwahl 104 eine erste Kenngröße, eine zweite Kenngröße und eine dritte Kenngröße entsprechend dem erfindungsgemäßen Verfahren berechnet und die Ermittlung eines geeigneten Übertragungskanales 33 nach Formeln (8) oder (9) und Formel (10) in dem Mittel zur automatischen Kanalauswahl für Mehrpunktverbindungen 104 vorgenommen. Anschließend wird die Nummer des ermittelten Übertragungskanals an den Signalgenerator 96 ausgegeben. Der Aufbau der Punkt-zu-Mehrpunktverbindung zur Übertragung von Signalen erfolgt in der betrachteten Ausführungsform entsprechend den Verfahren der betrachteten Station und den in dieser Station implementierten Verfahren zum Verbindungsaufbau. Verfahren für den Aufbau einer solchen Verbindung für den Bereich des Kurzwellenfunks definieren die Standards STANAG 4538, FED-STD-1045, MIL-STD 188-141B. Die Steuerung der Verfahrensschritte wird im dargestellten Beispiel über einen Prozessoreinheit 95 und eine Nutzerschnittstelle 96 vorgenommen .

Weitere Ausführungsformen der erfindungsgemäßen Vorrichtung sind ebenso möglich. Insbesondere ist es vorteilhaft, wenn das Mittel zur Berechnung der zweiten Kenngröße als zweite Kenngröße die Standardabweichung berechnet und das Mittel zum Berechnen der ersten Kenngröße als erste Kenngröße den arithmetischen Mittelwert berechnet.

In einer besonderen Ausführungsform der erfindungsgemäßen Vorrichtung wird der für eine Punkt-zu-Mehrpunktverbindung geeignete Kanal mit Station 90 als rufender Station durch Ermittlung der ersten Kenngröße als Maß für den Mittelwert der zu Qualitätseigenschaften des zu Verfügung stehenden Kanals, beispielweise des arithmetischen Mittelwerts, und der zweiten Kenngröße, beispielsweise der Standardabweichung, und anschließende Korrektur der ersten Kenngröße mit der zweiten Kenngröße berechnet. Diese Berechnung wird in der dargestellten Station 90 in der Einheit zur automatischen Kanalwahl für Mehrpunktverbindungen 104 ausgeführt. Anschließend wird nach Berechnung der Kenngrößen und der Erreichbarkeit $\varphi_k$

$$\varphi_k = \overline{x}_k - \sigma_k ;$$

der Kanal, beziehungsweise die Kanalnummer k ermittelt, für die gilt

$$k = \max (\varphi_k) \qquad (13)$$

und der ermittelte Kanal beziehungswiese die Kanalnummer k an den Signalgenerator 96 zur Einstellung des Übertragungskanals weitergegeben. Der Signalgenerator 96 stellt den entsprechenden Übertragungskanal mit den Eigenschaften des Übertragungskanals wie z.B. Sendefrequenz ein und steuert über eine Lokaloszillatoreinheit 97 die Misch- und Sendeverstärkereinheit 99 an. Das in dieser Einheit 99 erzeugte Sendesignal wird über einen Diplexer 92 an die Antenne 91 zur Abstrahlung weitergeführt.

Innerhalb der Einheit zur automatischen Kanalwahl 100 kann eine Skalierung der zweiten Kenngröße und/oder der dritten Kenngröße mit einem Skalierungsfaktor erfolgen. In einer vorteilhaften Ausführungsform der erfindungsgemäßen Vorrichtung erfolgt dabei die Multiplikation der zweiten Kenngröße mit einem Faktor $\alpha$ und der dritten Kenngröße mit dem Faktor (1-$\alpha$). Dabei gilt bevorzugt

$$0 \leq \alpha \leq 1 \qquad (14)$$

Es sind jedoch auch andere Skalierungsfaktoren und eine andere Relation der Skalierungsfaktoren für die zweite Kenngröße und die dritte Kenngröße zueinander möglich.

Darüberhinaus kann in der Einheit zur automatischen Kanalwahl für Mehrpunktverbindungen 104 eine Gewichtung der Qualitätswerte für einen Übertagungskanal und zu einem Empfänger beziehungsweise einer gerufenen Station über die Zeit mit einer Gewichtungsfunktion entsprechend Figur 6 erfolgen. Die Gewichtungsfunktion

$$\beta_t = e^{-\lambda \Delta t} \qquad (15)$$

berücksichtigt den zeitlichen Abstand des jeweils zu gewichtenden Qualitätswertes von dem aktuellen Zeitpunkt des Verbindungsaufbaus. In Figur 6 wird dies in den exponentiell abfallenden Qualitätswerten innerhalb der Zeilen für die einzelnen Stationen 1 bis M mit zunehmendem Abstand des Zeitschlitzes von der aktuellen Zeit deutlich. Damit erfahren innerhalb des erfindungsgemäßen Verfahrens die zeitabhängigen Ausbreitungseigenschaften innerhalb des Übertragungskanals ihre Berücksichtigung. Je größer der zeitliche Abstand eines Qualitätswertes von dem Zeitpunkt des Verbindungsaufbaus ist, desto geringer ist infolge der Gewichtung der Einfluss eines Qualitätswertes auf die Summe der Qualitätswerte für eine Station im betrachteten Übertragungskanal. Handelt es sich im betrachteten Ausführungsbeispiel um ein Funkkommunikationssystem im Kurzwellenbereich, so wird über diese Gewichtung der Eigenschaft des Funkkanals im Kurzwellenbereich Rechnung getragen, dass die Übertragungsqualität stark zeitabhängig ist und insbesondere auch von Tag zu Nacht stark schwankt. Für den Fall des Funkübertragung im Kurzwellenbereich ist damit ein Qualitätswert der für einen Zeitschlitz am Tag gilt von geringerer Aussagekraft für eine Verbindung in der Nacht als ein Qualitätswert, der für eine nächtliche Verbindung ermittelt wurde.

Die in der Speichereinrichtung 103 der Einheit zum automatischen Verbindungsaufbau 100 gespeicherten Qualitätswerte können auf einer Vielzahl unterschiedlicher Maßstäbe für die Beurteilung der Übertragungsqualität, wie sie in drahtlosen oder leitungsgebundenen Verbindungen benutzt werden, beruhen. Typischerweise wird hierbei der Signal-Rauschabstand SNR oder SINAD (signal-plus-noiseplus-distortion-to-noise-plus-distortion-ratio) verwendet. Ebenso kann eine Bitfehlerrate BER oder die Auswirkungen einer Dopplerverschiebung auf das Signalspektrum oder die Einflüsse der Ausbreitung über mehrere Ausbreitungswege für den Kanal zwischen zwei Stationen Berücksichtigung finden. Neben einem einzelnen Kriterium kann auch die Kombination mehrerer der genannten oder anderer Kriterien zur Ermittlung eines Qualitätswertes herangezogen werden.

Eine Vorrichtung zur automatischen Kanalwahl für Mehrpunktverbindungen kann in weiteren Ausführungsformen auch als ein ausführbares Program oder als ausführbares Programmodul im Rahmen eines Programms zur automatischen Verbindungsaufnahme einer Station zu einer anderen Station (Automatic Link Establishment) implementiert sein. Das Programm oder das Programmodul können dabei geeignet sein, auf einem Computer oder einem Signalprozessor ausgeführt zu werden.

Die erfindungsgemäße Vorrichtung und das erfindungsgemäße Verfahren sowie Program sind nicht auf die dargestellten Ausführungsbeispiele beschränkt, sondern auch zur Anwendung für andere Übertragungsverfahren und in weiteren Kommunikationsnetzen geeignet. Dabei sind alle Merkmale der Erfindung vorteilhaft miteinander kombinierbar.

**Patentansprüche**

1. Verfahren zur automatischen Auswahl eines Übertragungskanals aus einer Mehrzahl von Übertragungskanälen (212, 213, 214) zum Senden eines Signals von einem Sender (21) zu einem ersten Empfänger (22) und mindestens einem zweiten Empfänger (23, 24) in einem Funksystem;

   - wobei zunächst für jeden Empfänger (22, 23, 24) Qualitätswerte für die Qualität einer Verbindung von dem Sender (21) zu dem ersten und mindestens einem zweiten Empfänger (22, 23, 24) abhängig von Übertragungskanal (212, 213, 214) und Zeit ermittelt und gespeichert werden, wobei für jeden Übertragungskanal (212, 213, 214), der zur Übertragung des Signals geeignet ist, Qualitätswerte ermittelt werden; und
   - eine erste Kenngröße für jeden Übertragungskanal (212, 213, 214) aus den Qualitätswerten berechnet wird, wobei die erste Kenngröße ($\bar{x}$) einen Mittelwert ($\bar{x}$) der Qualitätswerte der Verbindungen von dem Sender (21) zu dem ersten Empfänger (22) und mindestens einem zweiten Empfänger (23, 24) beschreibt;
   **dadurch gekennzeichnet,**
   **dass** das Verfahren zusätzlich folgende Schritte aufweist:
   - Berechnen einer zweiten Kenngröße ($\sigma$) für jeden Übertragungskanal aus den gespeicherten Qualitätswerten, wobei die zweite Kenngröße ($\sigma$) die Streuung der Qualitätswerte der Verbindungen von dem Sender (21) zu einem ersten Empfänger (22) und mindestens einem zweiten Empfänger (23, 24) darstellt;
   - Korrigieren jeweils der ersten Kenngröße mit der zweiten Kenngröße für alle Übertragungskanäle (212, 213, 214); und
   - Auswahl des Übertragungskanals zum Senden des Signals, der den größten Wert der mittels der zweiten Kenngröße korrigierten ersten Kenngröße aufweist.

2. Verfahren nach Anspruch 1,
   **dadurch gekennzeichnet,**
   **dass** als erste Kenngröße der arithmetische Mittelwert verwendet wird.

3. Verfahren nach einem der Ansprüche 1 oder 2,
   **dadurch gekennzeichnet,**
   **dass** als zweite Kenngröße die Standardabweichung ($\sigma$) verwendet wird.

4. Verfahren nach einem der Ansprüche 1 bis 3,
   **dadurch gekennzeichnet,**
   **dass** das Verfahren folgende weitere Schritte aufweist:

   - Berechnen einer dritten Kenngröße aus den Qualitätswerten für jeden Übertragungskanal, die den Median ($\tilde{x}$) der Qualitätswerte der Verbindungen (212, 213, 214) von dem Sender (21) zu einem ersten Empfänger (22) und mindestens einem zweiten Empfänger (23, 24) darstellt; und
   - Auswählen des Übertragungskanals für die Verbindung, der den maximalen Wert der Summe aus dritter Kenngröße und mittels der zweiten Kenngrößen korrigierter ersten Kenngröße aufweist.

5. Verfahren nach Anspruch 4,
   **dadurch gekennzeichnet,**
   **dass** die zweite Kenngröße mit einem ersten Faktor ($\alpha$) und/oder die dritte Kenngröße mit einem zweiten Faktor (1 - $\alpha$) skaliert werden.

6. Verfahren nach einem der Ansprüche 1 bis 5,
   **dadurch gekennzeichnet,**
   **dass** alle Qualitätswerte für jeden Übertragungskanal (212, 213, 214) und jeden Empfänger (22, 23, 24) über die Zeit mit einer Gewichtungsfunktion multipliziert werden; und
   **dass** die Gewichtungsfunktion den zeitlichen Abstand des jeweils zu gewichtenden Qualitätswertes von dem Zeitpunkt der Verbindung berücksichtigt.

7. Verfahren nach einem der Ansprüche 1 bis 6,
   **dadurch gekennzeichnet,**
   **dass** die Qualitätswerte für eine Verbindung auf einer der Größen Signal-zu-Rauschabstand (SNR), Bitfehlerrate, Dopplerverschiebung, Anzahl der Ausbreitungswege des Signals oder einer Kombination der Größen beruhen.

8. Vorrichtung zur automatischen Auswahl eines Übertragungskanals (212, 213, 214) aus einer Mehrzahl von Übertragungskanälen zum Senden eines Signals von einem Sender (21) zu einem ersten Empfänger (22) und mindestens einem zweiten Empfänger (23, 24) in einem Funksystem, wobei die Vorrichtung (100)

- Mittel geeignet zur Ermittlung (102) und Speicherung (103) von Qualitätswerten für die Qualität einer Verbindung abhängig von Übertragungskanal (212, 213, 214) und Zeit von dem Sender (21) zu dem ersten oder mindestens einem zweiten Empfänger (22, 23, 24), wobei für jeden Übertragungskanal (212, 213, 214), der zur Übertragung des Signals geeignet ist, Qualitätswerte ermittelt werden; und
- Mittel (104) geeignet zum Berechnen einer ersten Kenngröße für jeden Übertragungskanal (212, 213, 214) aus den Qualitätswerten, wobei die erste Kenngröße ($\bar{x}$) den Mittelwert ($\bar{x}$) der Qualitätswerte der Verbindungen von dem Sender (21) zu dem ersten Empfänger (22) und mindestens einem zweiten Empfänger (23, 24) beschreibt, aufweist.
**dadurch gekennzeichnet,**
**dass** die Vorrichtung (100) zusätzlich aufweist:

- Mittel (104) geeignet zum Berechnen einer zweiten Kenngröße ($\sigma$) für jeden Übertragungskanal (212, 213, 214) aus den gespeicherten Qualitätswerten, wobei die zweite Kenngröße ($\sigma$) eine Streuung der Qualitätswerte der Verbindungen von dem Sender (21) zu dem ersten Empfänger (22) und dem wenigstens einen zweiten Empfänger (23, 24) darstellt,
- Mittel geeignet zum Korrigieren jeweils der ersten Kenngröße mit der zweiten Kenngröße für alle Übertragungskanäle (212, 213, 214); und
- Mittel geeignet zur Auswahl eines Übertragungskanals für die Verbindung, der den größten Wert der mittels der zweiten Kenngröße korrigierten ersten Kenngröße aufweist.

9. Vorrichtung nach Anspruch 8,
**dadurch gekennzeichnet,**
**dass** das Mittel zur Berechnung der ersten Kenngröße als erste Kenngröße den arithmetischen Mittelwert ($\bar{x}$) verwendet.

10. vorrichtung nach einem der Ansprüche 8 oder 9,
**dadurch gekennzeichnet,**
**dass** das Mittel zur Berechnung der zweiten Kenngröße ($\sigma$) als zweite Kenngröße die Standardabweichung verwendet.

11. vorrichtung nach einem der Ansprüche 8 bis 10,
**dadurch gekennzeichnet,**
**dass** die Vorrichtung zusätzlich aufweist:

- Mittel geeignet zum Berechnen einer dritten Kenngröße ($\tilde{x}$) aus den Qualitätswerten für jeden Übertragungskanal (212, 213, 214), das den Median der Qualitätswerte der Verbindungen von dem Sender (21) zu einem ersten Empfänger (22) und mindestens einem zweiten Empfänger (23, 24) darstellt; und
- das Mittel zur Auswahl eines Übertragungskanals für die Verbindung den Kanal für die Verbindung auswählt, der den maximalen Wert ($\varphi_k$) der Summe aus der dritten Kenngröße ($\tilde{x}$) und der, mittels der zweiten Kenngröße ($\sigma$) korrigierten ersten Kenngröße ($\bar{x}$) erzielt.

12. Vorrichtung nach Anspruch 11,
**dadurch gekennzeichnet,**
**dass** das Mittel zur Auswahl eines Übertragungskanals (212, 213, 214) dafür geeignet ist, die zweite Kenngröße ($\tilde{x}$) mit einem ersten Faktor ($\alpha$) und/oder die dritte Kenngröße ($\tilde{x}$) mit einem zweiten Faktor (1 - $\alpha$) zu skalieren.

13. Vorrichtung nach einem der Ansprüche 8 bis 12,
**dadurch gekennzeichnet,**
**dass** die Vorrichtung Mittel geeignet zur Gewichtung der Qualitätswerte für jeden Übertragungskanal (212, 213, 214) und einen Empfänger (22, 23, 24) über die Zeit mit einer Gewichtungsfunktion aufweist, wobei die Gewichtungsfunktion den zeitlichen Abstand des jeweils zu gewichtenden Qualitätswertes von dem Zeitpunkt der Verbindung berücksichtigt.

14. Vorrichtung nach einem der Ansprüche 8 bis 13,

**dadurch gekennzeichnet,**
**dass** das Mittel zur Speicherung (103) der Qualitätswerte Qualitätswerte speichert, die auf einer der Größen Signal-zu-Rauschabstand (SNR), Bitfehlerrate, Dopplerverschiebung, Anzahl der Ausbreitungswege des Signals oder einer Kombination dieser Größen beruhen.

15. Computerprogramm mit Programmcode-Mitteln, um alle Schritte gemäß einem der Ansprüche 1 bis 7 durchführen zu können, wenn das Programm auf einem Computer oder einem digitalen Signalprozessor ausgeführt wird.

16. Computerprogramm-Produkt mit auf einem maschinenlesbaren Datenträger gespeicherten Programmcode-Mitteln, um alle Schritte gemäß einem der Ansprüche 1 bis 7 durchführen zu können, wenn das Programm auf einem Computer oder einem digitalen Signalprozessor ausgeführt wird.

**Claims**

1. Method for automatic selection of a transmission channel from a plurality of transmission channels (212, 213, 214) for transmitting a signal from a transmitter (21) to a first receiver (22) and at least one second receiver (23, 24) in a radio system;

   - wherein first for each receiver (22, 23, 24) quality values are determined and stored for the quality of a connection from the transmitter (21) to the first and at least one second receiver (22, 23, 24) depending on the transmission channel (212, 213, 214) and time, quality values being determined for each transmission channel (212, 213, 214) which is capable of transmitting the signal; and
   - a first characteristic parameter is calculated for each transmission channel (212, 213, 214) from the quality values, the first characteristic parameter ($\bar{x}$) describing a mean value ($\bar{x}$) of the quality values of the connections from the transmitter (21) to the first receiver (22) and at least one second receiver (23, 24);
   **characterised in that** the method additionally comprises the following steps:
   - calculation of a second characteristic parameter ($\sigma$) for each transmission channel from the stored quality values, the second characteristic parameter ($\sigma$) representing the scatter of the quality values of the connections from the transmitter (21) to a first receiver (22) and at least one second receiver (23, 24) ;
   - correction of in each case the first characteristic parameter with the second characteristic parameter for all the transmission channels (212, 213, 214); and
   - selection of the transmission channel for transmitting the signal which has the greatest value of the first characteristic parameter corrected by means of the second characteristic parameter.

2. Method according to claim 1,
   **characterised in that** the arithmetic mean value is used as the first characteristic parameter.

3. Method according to one of claims 1 or 2,
   **characterised in that** the standard deviation ($\sigma$) is used as the second characteristic parameter.

4. Method according to one of claims 1 to 3,
   **characterised in that** the method comprises the following further steps:

   - calculation of a third characteristic parameter from the quality values for each transmission channel which represents the median ($\tilde{x}$) of the quality values of the connections (212, 213, 214) from the transmitter (21) to a first receiver (22) and at least one second receiver (23, 24); and
   - selection of the transmission channel for the connection which has the maximum value of the sum of the third characteristic parameter and the first characteristic parameter corrected by means of the second characteristic parameters.

5. Method according to claim 4,
   **characterised in that** the second characteristic parameter is scaled with a first factor ($\alpha$) and/or the third characteristic parameter is scaled with a second factor ($1 - \alpha$).

6. Method according to one of claims 1 to 5,
   **characterised in that** all the quality values for each transmission channel (212, 213, 214) and each receiver (22, 23, 24) over the time are multiplied with a weighting function; and

**in that** the weighting function takes account of the time gap of each quality value to be weighted from the point in time of the connection.

7. Method according to one of claims 1 to 6, **characterised in that** the quality values for a connection are based on one of the parameters signal-to-noise ratio (SNR), bit error rate, Doppler shift, number of propagation paths of the signal or a combination of the parameters.

8. Device for automatic selection of a transmission channel (212, 213, 214) from a plurality of transmission channels for transmitting a signal from a transmitter (21) to a first receiver (22) and at least one second receiver (23, 24) in a radio system, wherein the device (100) comprises

   - means capable of determining (102) and storing (103) quality values for the quality of a connection from the transmitter (21) to the first or at least one second receiver (22, 23, 24) depending on the transmission channel (212, 213, 214) and time, quality values being determined for each transmission channel (212, 213, 214) which is capable of transmitting the signal; and
   - means (104) capable of calculating a first characteristic parameter for each transmission channel (212, 213, 214) from the quality values, the first characteristic parameter ($\bar{x}$) describing the mean value ($\bar{x}$) of the quality values of the connections from the transmitter (21) to the first receiver (22) and at least one second receiver (23, 24),

   **characterised in that** the device (100) additionally comprises:

   - means (104) capable of calculating a second characteristic parameter ($\sigma$) for each transmission channel (212, 213, 214) from the stored quality values, the second characteristic parameter ($\sigma$) representing a scatter of the quality values of the connections from the transmitter (21) to the first receiver (22) and the at least one second receiver (23, 24),
   - means capable of correcting the first characteristic parameter in each case with the second characteristic parameter for all the transmission channels (212, 213, 214); and
   - means capable of selecting a transmission channel for the connection which has the greatest value of the first characteristic parameter corrected by means of the second characteristic parameter.

9. Device according to claim 8,
   **characterised in that** the means for calculating the first characteristic parameter uses the arithmetic mean value ($\bar{x}$) as the first characteristic parameter.

10. Device according to one of claims 8 or 9, **characterised in that** the means for calculating the second characteristic parameter ($\sigma$) uses the standard deviation as the second characteristic parameter.

11. Device according to one of claims 8 to 10, **characterised in that** the device additionally comprises:

    - means capable of calculating a third characteristic parameter ($\tilde{x}$) from the quality values for each transmission channel (212, 213, 214) which represents the median of the quality values of the connections from the transmitter (21) to a first receiver (22) and at least one second receiver (23, 24); and
    - the means for selecting a transmission channel for the connection selects the channel for the connection which produces the maximum value ($\varphi_k$) of the sum of the third characteristic parameter ($\tilde{x}$) and the first characteristic parameter ($\bar{x}$) corrected by means of the second characteristic parameter ($\sigma$).

12. Device according to claim 11,
    **characterised in that** the means for selecting a transmission channel (212, 213, 214) is capable of scaling the second characteristic parameter ($\tilde{x}$) with a first factor ($\alpha$) and/or scaling the third characteristic parameter ($\tilde{x}$) with a second factor (1 - $\alpha$) .

13. Device according to one of claims 8 to 12, **characterised in that** the device comprises means capable of weighting the quality values for each transmission channel (212, 213, 214) and a receiver (22, 23, 24) over the time with a weighting function, the weighting function taking account of the time gap of each quality value to be weighted from the point in time of the connection.

**14.** Device according to one of claims 8 to 13,
**characterised in that** the means for storing (103) the quality values stores quality values which are based on one of the parameters signal-to-noise ratio (SNR), bit error rate, Doppler shift, number of propagation paths of the signal or a combination of these parameters.

**15.** Computer programme with programme code means in order to be able to carry out all the steps according to one of claims 1 to 7 when the programme is executed on a computer or a digital signal processor.

**16.** Computer programme product with programme code means stored on a machine-readable data medium in order to be able to carry out all the steps according to one of claims 1 to 7 when the programme is executed on a computer or a digital signal processor.

**Revendications**

**1.** Procédé de sélection automatique d'un canal de transmission à partir d'une pluralité de canaux de transmission (212, 213, 214) pour l'envoi d'un signal d'un émetteur (21) à un premier récepteur (22) et à au moins un deuxième récepteur (23, 24) dans un système radio ;

- des valeurs de qualité pour la qualité d'une liaison de l'émetteur (21) au premier et au moins à un deuxième récepteur (22, 23, 24) en fonction du canal de transmission (212, 213, 214) et du temps étant tout d'abord établies et mises en mémoire pour chaque récepteur (22, 23, 24), des valeurs de qualité étant établies pour chaque canal de transmission (212, 213, 214) qui est adapté à transmettre le signal ; et
- une première grandeur caractéristique étant calculée pour chaque canal dé transmission (212, 213, 214) à partir des valeurs de qualité, la première grandeur caractéristique ($\bar{x}$) décrivant une valeur moyenne ($\bar{x}$) des valeurs de qualité des liaisons de l'émetteur (21) au premier récepteur (22) et au moins à un deuxième récepteur (23, 24) ;

**caractérisé en ce que**
le procédé comprend en plus les étapes suivantes consistant à :

- calculer une deuxième grandeur caractéristique ($\sigma$) pour chaque canal de transmission à partir des valeurs de qualité mises en mémoire, la deuxième grandeur caractéristique ($\sigma$) représentant la variance des valeurs de qualité des liaisons de l'émetteur (21) à un premier récepteur (22) et à au moins un deuxième récepteur (23, 24) ;
- corriger dans chaque cas la première grandeur caractéristique au moyen de la deuxième grandeur caractéristique pour tous les canaux de transmission (212, 213, 214) ; et
- sélectionner pour l'envoi du signal le canal de transmission qui comprend la plus grande valeur de la première grandeur caractéristique corrigée au moyen de la deuxième grandeur caractéristique.

**2.** Procédé selon la revendication 1,
**caractérisé en ce que**
la valeur moyenne arithmétique est utilisée comme première grandeur caractéristique.

**3.** Procédé selon l'une quelconque des revendications 1 ou 2,
**caractérisé en ce que**
l'écart type ($\sigma$) est utilisé comme deuxième grandeur caractéristique.

**4.** Procédé selon l'une quelconque des revendications 1 à 3,
**caractérisé en ce que**
le procédé comprend d'autres étapes suivantes consistant à :

- calculer une troisième grandeur caractéristique à partir des valeurs de qualité pour chaque canal de transmission, laquelle représente la médiane ($\tilde{x}$) des valeurs de qualité des liaisons (212, 213, 214) de l'émetteur (21) à un premier récepteur (22) et au moins à un deuxième récepteur (23, 24) ; et
- sélectionner pour la liaison le canal de transmission qui comprend la valeur maximale de la somme de la troisième grandeur caractéristique et de la première grandeur caractéristique corrigée au moyen de la deuxième grandeur caractéristique.

**5.** Procédé selon la revendication 4,
**caractérisé en ce que**
la deuxième grandeur caractéristique est mise à l'échelle par un premier facteur ($\alpha$) et/ou la troisième grandeur caractéristique est mise à l'échelle par un deuxième facteur (1-$\alpha$).

**6.** Procédé selon l'une quelconque des revendications 1 à 5,
**caractérisé en ce que**
toutes les valeurs de qualité pour chaque canal de transmission (212, 213, 214) et chaque récepteur (22, 23, 24) sont multipliées dans le temps au moyen d'une fonction de pondération ; et **en ce que**
la fonction de pondération prend en compte l'intervalle de temps de chaque valeur de qualité à pondérer par rapport au moment de la liaison.ki

**7.** Procédé selon l'une quelconque des revendications 1 à 6,
**caractérisé en ce que**
les valeurs de qualité pour une liaison reposent sur une des grandeurs rapport signal-bruit (SNR), taux d'erreur binaire, décalage Doppler, nombre de trajets de propagation du signal ou sur une combinaison des grandeurs.

**8.** Dispositif de sélection automatique d'un canal de transmission (212, 213, 214) à partir d'une pluralité de canaux de transmission pour l'envoi d'un signal d'un émetteur (21) à un premier récepteur (22) et à au moins un deuxième récepteur (23, 24) dans un système radio, le dispositif (100) comprenant

- un moyen adapté à déterminer (102) et à mettre en mémoire (103) des valeurs de qualité pour la qualité d'une liaison en fonction du canal de transmission (212, 213, 214) et du temps de l'émetteur (21) au premier ou au moins à un deuxième récepteur (22, 23, 24), des valeurs de qualité étant établies pour chaque canal de transmission (212, 213, 214) qui est adapté à transmettre le signal ; et
- un moyen (104) adapté à calculer une première grandeur caractéristique pour chaque canal de transmission (212, 213, 214) à partir des valeurs de qualité, la première grandeur caractéristique ($\bar{x}$) décrivant la valeur moyenne ($\bar{x}$) des valeurs de qualité des liaisons de l'émetteur (21) au premier récepteur (22) et au moins à un deuxième récepteur (23, 24) ;

**caractérisé en ce que**
le dispositif (100) comprend en plus :

- un moyen (104) adapté à calculer une deuxième grandeur caractéristique ($\sigma$) pour chaque canal de transmission (212, 213, 214) à partir des valeurs de qualité mises en mémoire, la deuxième grandeur caractéristique ($\sigma$) représentant une variance des valeurs de qualité des liaisons de l'émetteur (21) au premier récepteur (22) et au ou aux deuxièmes récepteurs (23, 24) ;
- un moyen adapté à corriger dans chaque cas la première grandeur caractéristique au moyen de la deuxième grandeur caractéristique pour tous les canaux de transmission (212, 213, 214) ; et
- un moyen adapté à sélectionner pour la liaison un canal de transmission qui comprend la plus grande valeur de la première grandeur caractéristique corrigée au moyen de la deuxième grandeur caractéristique.

**9.** Dispositif selon la revendication 8,
**caractérisé en ce que**
le moyen de calcul de la première grandeur caractéristique utilise comme première grandeur caractéristique la valeur moyenne arithmétique ($\bar{x}$).

**10.** Dispositif selon l'une quelconque des revendications 8 ou 9,
**caractérisé en ce que**
le moyen pour le calcul de la deuxième grandeur caractéristique ($\sigma$) utilise comme deuxième grandeur caractéristique l'écart type.

**11.** Dispositif selon l'une quelconque des revendications 8 à 10,
**caractérisé en ce que**
le dispositif comprend en plus :

- un moyen adapté à calculer une troisième grandeur caractéristique ($\tilde{x}$) à partir des valeurs de qualité pour chaque canal de transmission (212, 213, 214) qui représente la médiane des valeurs de qualité des liaisons de l'émetteur (21) à un premier récepteur (22) et au moins à un deuxième récepteur (23, 24) ; et
- le moyen de sélection d'un canal de transmission pour la liaison comprend le canal pour la liaison, lequel obtient la valeur maximale ($\varphi_k$) de la somme de la troisième grandeur caractéristique ($\tilde{x}$) et de la première grandeur caractéristique ($\overline{x}$) corrigée au moyen de la deuxième grandeur caractéristique ($\sigma$).

**12.** Dispositif selon la revendication 11,
**caractérisé en ce que**
le moyen de sélection d'un canal de transmission (212, 213, 214) est adapté à mettre à l'échelle la deuxième grandeur caractéristique ($\tilde{x}$) par un premier facteur ($\alpha$) et/ou la troisième grandeur caractéristique ($\tilde{x}$) par un deuxième facteur (1-$\alpha$).

**13.** Dispositif selon l'une quelconque des revendications 8 à 12,
**caractérisé en ce que**
le dispositif comprend un moyen adapté à pondérer dans le temps les valeurs de qualité pour chaque canal de transmission (212, 213, 214) et un récepteur (22, 23, 24) au moyen d'une fonction de pondération, la fonction de pondération prenant en compte l'intervalle de temps de chaque valeur de qualité à pondérer par rapport au moment de la liaison.

**14.** Dispositif selon l'une quelconque des revendications 8 à 13,
**caractérisé en ce que**
le moyen de mise en mémoire (103) des valeurs de qualité met en mémoire des valeurs de qualité qui reposent sur une des grandeurs rapport signal-bruit (SNR), taux d'erreur binaire, décalage Doppler, nombre de trajets de propagation du signal ou sur une combinaison de ces grandeurs.

**15.** Programme informatique comprenant des moyens de code de programme, afin de pouvoir réaliser toutes les étapes selon l'une quelconque des revendications 1 à 7, lorsque le programme est exécuté sur un ordinateur ou un processeur de signal numérique.

**16.** Produit-programme informatique comprenant des moyens de code de programme mis en mémoire sur un support de données lisible par ordinateur, afin de pouvoir réaliser toutes les étapes selon l'une quelconque des revendications 1 à 7, lorsque le programme est exécuté sur un ordinateur ou un processeur de signal numérique.

SNR Verlauf einer Testmessung | 21-03-2009 | MUC → MEM |
4,502MHz | 150W | S4539@75bps/long

Fig. 1

Fig. 2

**Fig. 3**

EP 2 285 022 B1

## Fig. 4

```
┌─────────────────────────────────┐
│  Erstellen einer Tabelle mit den│
│     Dimensionen Stations-       │
│  bezeichnung, Kanalbezeichnung  │
│       und Zeitschlitz           │  S1
└─────────────────────────────────┘
                │
                ▼
┌─────────────────────────────────┐
│  Gewichtung der Tabelleneinträge│
│  mit Gewichtungsfaktor $\beta_t$│  S2
└─────────────────────────────────┘
                │
                ▼
┌─────────────────────────────────┐
│   Auffüllen der Leerstellen der │
│            Tabelle              │  S3
└─────────────────────────────────┘
                │
                ▼
┌─────────────────────────────────┐
│  Berechnen des arithmetischen   │
│     Mittelwerts als erstem      │
│          Kriterium              │  S4
└─────────────────────────────────┘
                │
                ▼
┌─────────────────────────────────┐
│       Berechnen der             │
│ Standardabweichung als zweitem  │
│          Kriterium              │  S5
└─────────────────────────────────┘
                │
                ▼
┌─────────────────────────────────┐
│     Berechnen des Median als    │
│       drittem Kriterium         │  S6
└─────────────────────────────────┘
                │
                ▼
┌─────────────────────────────────┐
│  Berechnen der Werte $\varphi_k$ für │
│        alle Kanäle k            │  S7
└─────────────────────────────────┘
                │
                ▼
┌─────────────────────────────────┐
│  Festlegen eines Parameters α   │  S8
└─────────────────────────────────┘
                │
                ▼
┌─────────────────────────────────┐
│  Ermitteln des Kanals k mit dem │
│    maximalen Wert $\varphi_k$   │  S9
└─────────────────────────────────┘
                │
                ▼
┌─────────────────────────────────┐
│    Ausgabe des ermittelten      │
│          Kanals k               │  S10
└─────────────────────────────────┘
```

Gewichtungsfunktion → $e^{(-\lambda \cdot \text{Zeitschlitz})}$

**Fig. 5**

**Fig. 6**

Fig. 7

| Kanal<br>Station | 1 | 2 |
|---|---|---|
| Station 1 | 10,00 | 20,00 |
| Station 2 | 10,00 | 20,00 |
| Station 3 | 12,00 | 20,00 |
| Station 4 | 11,00 | 20,00 |
| Station 5 | 11,00 | 20,00 |
| Station 6 | 10,00 | 20,00 |
| Station 7 | 9,00 | -20,00 |
| Station 8 | 10,00 | 20,00 |
| **Mittelwert** | **10,38** | **15,00** |
| **Median** | **10,00** | **20,00** |
| **Standardabweichung** | **0,92** | **14,14** |
| **Score** | **12,73** | **11,10** |
| für α = 0,7 | | |

Fig. 8

| Station \ Channel | 1 | 2 | 3 | 4 | 5 | 6 | 7 |
|---|---|---|---|---|---|---|---|
| Station 1 | -1,00 | 0,00 | 1,00 | 1,00 | -15,00 | -19,00 | 15,00 |
| Station 2 | -1,00 | -4,00 | 5,00 | 1,00 | 1,00 | -1,00 | 20,00 |
| Station 3 | -1,00 | -3,00 | -2,00 | 1,00 | 10,00 | 12,00 | -10,00 |
| Station 4 | 1,00 | -1,00 | 2,00 | 2,00 | 2,00 | -1,00 | 3,00 |
| Station 5 | -1,00 | -2,00 | 2,00 | -2,00 | 13,00 | -10,00 | 4,00 |
| Station 6 | -1,00 | -2,00 | 1,00 | -1,00 | 3,00 | 6,00 | -5,00 |
| Station 7 | -1,00 | 0,00 | 1,00 | 1,00 | -15,00 | -19,00 | 15,00 |
| Station 8 | -1,00 | -4,00 | 5,00 | 1,00 | 1,00 | -1,00 | 20,00 |
| Station 9 | -1,00 | -3,00 | -2,00 | 1,00 | 10,00 | 12,00 | -10,00 |
| Station 10 | 1,00 | -1,00 | 2,00 | 2,00 | 2,00 | -1,00 | 3,00 |
| Station 11 | -1,00 | -2,00 | 2,00 | -2,00 | 13,00 | -10,00 | 4,00 |
| Station 12 | -1,00 | -2,00 | 1,00 | -1,00 | 3,00 | 6,00 | -5,00 |
| Mean value | -0,67 | -2,00 | 1,50 | 0,33 | 2,33 | -2,67 | 4,50 |
| Median | -1,00 | -2,00 | 1,50 | 1,00 | 2,50 | -1,00 | 3,50 |
| Standard deviation | 0,78 | 1,35 | 2,15 | 1,44 | 9,30 | 10,57 | 10,90 |
| Score | -1,56 | -3,67 | 1,17 | 0,12 | -1,06 | -8,45 | 0,80 |

for $\alpha = 0,5$

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4328581 A
- WO 0126403 A1